# EUROPÄISCHE PATENTANMELDUNG

(11) **EP 2 353 949 A2**
(43) Veröffentlichungstag der Anmeldung: **10.08.2011**
(21) Anmeldenummer: 10015926.8
(22) Anmeldetag: 22.12.2010
(51) Int. Cl.: B60T 7/04, B60T 7/10

(54) **Betätigungsvorrichtung für eine Feststellbremse**

(30) Priorität: 22.01.2010 DE 202010001257 U
(71) Anmelder: Power-Cast Light Metal Solutions GmbH & Co KG, 73265 Dettingen/Teck (DE)
(72) Erfinder: Barcin, Baris, 70771 Leinfelden-Echterdingen (DE)
(74) Vertreter: Ruckh, Rainer Gerhard

(57) **Zusammenfassung**

Die erfindungsgemäße Betätigungsvorrichtung (1) für eine Feststellbremse umfasst einen an einem Lagerbock (3) schwenkbar gelagerten Handbremshebel (2), welcher mittels einer Festsetzeinrichtung (9) in einer vorgegebenen Schwenkstellung fixierbar. Im Handbremshebel (2) ist eine in Wirkverbindung mit der Festsetzeinrichtung (9) stehende Betätigungsstange (7) geführt, welche im Handbremshebel (2) verschiebbar gelagert ist. Am Lagerbock (3) sind benachbart angeordnet ein Endanschlag und ein Schalter (17) vorgesehen, wobei der Handbremshebel (2) ein Anschlagsegment (18) aufweist. In einer durch den Endanschlag bestimmten Endposition des Handbremshebels (2) liegt das Anschlagsegment (18) am Endanschlag an und betätigt dabei den Schalter (17).

## Beschreibung

Die Erfindung betrifft eine Betätigungsvorrichtung für eine Feststellbremse.

Betätigungsvorrichtungen für Feststellbremsen werden insbesondere in Kraftfahrzeugen eingesetzt. Eine derartige Betätigungsvorrichtung ist beispielsweise aus der DE 10 2006 010 853 bekannt.

Die dort beschriebene Betätigungsvorrichtung umfasst einen Handbremshebel, der an einem Lagerbock schwenkbar gelagert ist. In dem Handbremshebel ist eine Betätigungsstange geführt, die mittels eines Druckknopfs betätigt werden kann und welche an eine Festsetzeinrichtung gekoppelt ist. Die Festsetzeinrichtung weist eine Sperrklinke und ein Sperrsegment auf. Das Sperrsegment ist am Lagerbock befestigt und weist eine Leiste mit Rastzähnen auf. Die Sperrklinke weist an ihrem unteren Ende eine Rastnase auf, die an den Rastzähnen des Sperrsegments eingerastet werden kann. Das obere Ende der Sperrklinke ist mit der Betätigungsstange gekoppelt.

Die Festsetzeinrichtung dient dazu, den Handbremshebel in einer bestimmten Schwenkstellung zu fixieren. Durch Betätigen des Druckknopfs kann die Festsetzeinrichtung gelöst werden und der Handbremshebel kann in eine andere Schwenkstellung eingebracht werden, in der er wiederum durch die Festsetzeinrichtung fixierbar ist.

Dabei wird zur Betätigung der Feststellbremse der Handbremshebel nach oben gezogen und in einer gewünschten Endposition mittels der Festsetzeinrichtung fixiert. Soll die Feststellbremse gelöst werden, wird der Druckknopf betätigt und der Handbremshebel abgesenkt, bis er sich in seiner durch einen Endanschlag bestimmten untersten Position befindet.

Der Erfindung liegt die Aufgabe zugrunde, eine Betätigungsvorrichtung der eingangs genannten Art bereitzustellen, welche bei geringem konstruktivem Aufbau eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Betätigungsvorrichtung für eine Feststellbremse umfasst einen an einem Lagerbock schwenkbar gelagerten Handbremshebel, welcher mittels einer Festsetzeinrichtung in einer vorgegebenen Schwenkstellung fixierbar. Im Handbremshebel ist eine in Wirkverbindung mit der Festsetzeinrichtung stehende Betätigungsstange geführt, welche im Handbremshebel verschiebbar gelagert ist. Am Lagerbock sind benachbart angeordnet ein Endanschlag und ein Schalter vorgesehen, wobei der Handbremshebel ein Anschlagsegment aufweist. In einer durch den Endanschlag bestimmten Endposition des Handbremshebels liegt das Anschlagsegment am Endanschlag an und betätigt dabei den Schalter.

Durch die dicht benachbarte Anordnung, vorzugsweise unmittelbar angrenzende Anordnung des Endanschlags am Lagerbock und des Schalters wird eine Doppelfunktion derart realisiert, dass bei Führen des Anschlagsegments des Handbremshebels gegen den Endanschlag nicht nur die Endposition des Handbremshebels definiert wird, sondern zugleich mit dem Anschlagsegment selbst der Schalter betätigt wird. Diese Doppelfunktion kann mit einem äußerst geringen Aufwand realisiert werden. Besonders vorteilhaft hierbei ist die sich ergebende einfache Geometrie des Lagerbocks und die mit einem geringen Teilaufwand mögliche Integration des Schalters am Lagerbock.

Eine besonders einfache geometrische Ausbildung der zur Fixierung des Handbremshebels notwendigen Teile in der Endposition ergibt sich, wenn am Lagerbock benachbart angeordnet ein Endanschlag und ein Schalter vorgesehen sind. Der Handbremshebel weist ein Anschlagsegment auf, wobei in einer durch den Endanschlag bestimmten Endposition des Handbremshebels das Anschlagsegment am Endanschlag anliegt und dabei den Schalter betätigt.

Der Endanschlag und der Schalter liegen dann platzsparend in einer entsprechenden, der Ebene des Anschlagsegments zugewandten Ebene.

In einer besonders vorteilhaften Ausführungsform der Erfindung umfasst der Schalter einen an der Oberseite eines Schaltgehäuses verschiebbar gelagerten Schaltknopf, welcher durch das Anschlagsegment des Handbremshebels in das Schaltgehäuse einfahrbar ist. Der Schalter weist bei aus dem Schaltgehäuse ausgefahrenem Schaltknopf einen ersten Schaltzustand und bei in das Schaltgehäuse eingefahrenem Schaltknopf einen zweiten Schaltzustand auf.

Dabei ist abhängig von den Schaltzuständen des Schalters eine Anzeige für die Betätigung der Feststellbremse aktiviert oder deaktiviert.

Diese Anzeige ist im Fahrerraum des Fahrzeugs, insbesondere Kraftfahrzeug, installiert, in welchem auch der Handbremshebel angeordnet ist. Die Anzeige bildet ein Warnsignal, das dem Fahrer die Betätigung der Feststellbremse anzeigt, damit der Fahrer diese vor dem Anfahren löst.

Die Ausführung des Schalters mit dem im Schaltgehäuse verschiebbar gelagerten Schalter stellt eine kostengünstig herstellbare und robuste Bauform des Schalters dar.

Um ein möglichst sicheres Schaltverhalten des Schalters zu gewährleisten, ist eine möglichst große Hubbewegung des gegen den Schaltknopf führbaren Anschlagsegments des Handbremshebels erforderlich. Nur dann ist einerseits gewährleistet, dass das Anschlagsegment sicher den Schaltknopf in das Schältgehäuse eindrückt und so den Schalter in den zweiten Schaltzustand versetzt, wenn das Anschlagsegment gegen den Endanschlag gedrückt ist. Ebenfalls ist andererseits gewährleistet, dass bei Anheben des Handbremshebels aus der Endposition das Anschlagsegment den Schaltknopf schnell freigibt, so dass dieser vollständig aus dem Schaltgehäuse ausfahren kann, so dass der Schalter sicher den ersten Schaltzustand einnimmt.

Dieses sichere Schaltverhalten wird dann erreicht, wenn das Anschlagsegment an dem einer Schwenklagerung des Handbremshebels am Lagerbock abgewandten Ende des Handbremshebels angeordnet ist, denn dann wird bei einem Schwenkwinkel des Handbremshebels die maximale Hubbewegung für das Anschlagsegment erhalten.

Besonders vorteilhaft ist zur Ausbildung des Endanschlags an einem Segment des Lagerbocks eine Auflagefläche vorgesehen, auf welche die Anschlagfläche des Anschlagsegments des Handbremshebels führbar ist.

Dabei ist auf die Auflagefläche ein Gummipuffer aufgebracht.

Durch den Gummipuffer wird ein geräuscharmes Aufsitzen des Handbremshebels auf dem Endanschlag erreicht.

Die Erfindung wird im Folgenden anhand der Zeichnungen erläutert. Es zeigen:
- Figur 1:: Perspektivische Darstellung einer Betätigungsvorrichtung mit einem von einem Lagerbock weggeschwenkten Handbremshebel.
- Figur 2:: Erste Seitenansicht der Anordnung gemäß Figur 1.
- Figur 3:: Zweite Seitenansicht der Anordnung gemäß Figur 1.
- Figur 4:: Erste Seitenansicht der Betätigungsvorrichtung gemäß Figur 1 bei auf einem Endanschlag des Lagerbocks aufsitzenden Handbremshebel.
- Figur 5:: Zweite Seitenansicht der Anordnung gemäß Figur 4.

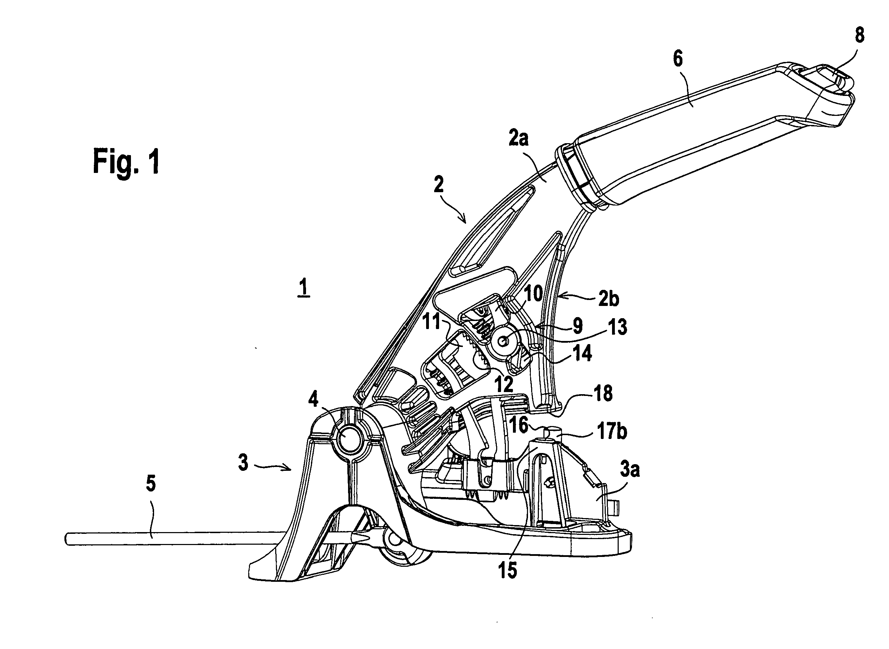

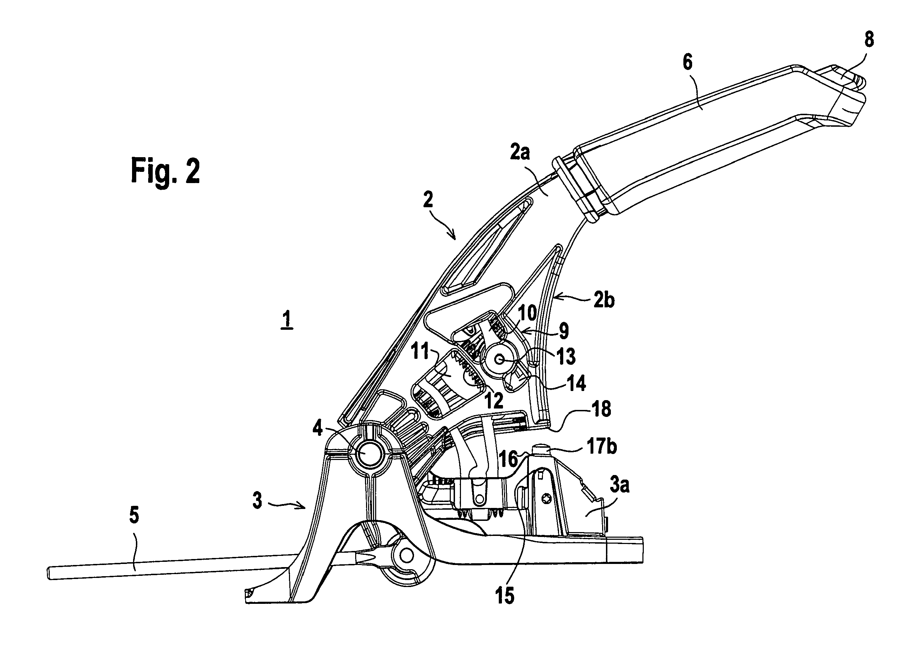

Die Figuren 1 bis 5 zeigen Ausführungsbeispiele der erfindungsgemäßen Betätigungsvorrichtung 1 für eine Feststellbremse in einem Fahrzeug. Das Fahrzeug ist insbesondere von einem Kraftfahrzeug gebildet.

Die Betätigungsvorrichtung 1 weist einen Handbremshebel 2 auf, welcher schwenkbar an einem Lagerbock 3 gelagert ist. Der Lagerbock 3 besteht aus wenigstens einem Gussteil, wobei das Gussteil vorzugsweise aus einer Leichtmetall-Legierung besteht.

Der Handbremshebel 2 ist einstückig ausgebildet und besteht ebenfalls aus einem Gussteil. Das Gussteil besteht auch in diesem Fall aus einer Leichtmetall-Legierung. Vorzugsweise werden sowohl für den Lagerbock 3 als auch für den Handbremshebel 2 Aluminium- oder Magnesium-Legierungen verwendet. Der Handbremshebel 2 ist um eine horizontal verlaufende Schwenkachse gelagert. Dabei ist der Handbremshebel 2 an einer Schwenklagerung 4 befestigt, an welcher auch ein Übertragungselement 5 befestigt ist.

Die jeweilige Stellung des Handbremshebels 2 wird über dieses Übertragungselement 5 auf die nicht dargestellte Feststellbremse des Fahrzeugs übertragen. Das Übertragungselement 5 kann von einem Seil, einem Kabel oder einer Stange gebildet sein.

Der Handbremshebel 2 weist ein rohrförmiges Segment auf, welches eine Führung 2a bildet und auf welches ein Handgriff 6 aufgesetzt ist. In der Führung 2a ist eine Betätigungsstange 7 geführt, die im vorliegenden Fall von einem stangenförmigen Kunststoffteil gebildet ist.

Auf dem vorderen Rand der Betätigungsstange 7, welcher über das vordere Ende der Führung 2a hervorsteht, ist ein Druckknopf 8 aufgesetzt und dort mittels Rastmitteln und dergleichen fixiert.

Die Betätigungsstange 7 ist mit einer Festsetzeinrichtung 9 gekoppelt. Mit dieser Festsetzeinrichtung 9 kann der Handbremshebel 2 in einer vorgegebenen Schwenkstellung fixiert werden.

Die Festsetzeinrichtung 9 weist im Wesentlichen eine Sperrklinke 10 und ein Sperrsegment 11 auf. Das Sperrsegment 11 ist am Lagerbock 3 befestigt und weist eine Leiste mit Rastzähnen 12 auf.

Die Sperrklinke 10 ist an einer Drehlagerung 13 um eine horizontal verlaufende Schwenkachse schwenkbar am Handbremshebel 2 gelagert und über ein Federelement 14 vorgespannt.

Die Drehachse läuft durch das Zentrum der Sperrklinke 10 und unterteilt diese in zwei beidseits zur Schwenkachse verlaufende Schwenkarme. Der erste Schwenkarm der Sperrklinke 10 ist an die Betätigungsstange 7 gekoppelt. Der zweite Schwenkarm der Sperrklinke 10 steht in Eingriff mit dem Sperrsegment 11. Hierzu weist die Sperrklinke 10 am vorderen Ende des zweiten Schwenkarmes eine Rastnase auf, die an den Rastzähnen 12 des Sperrsegments 11 eingerastet werden kann. Dadurch ist der Handbremshebel 2 in einer vorgegebenen Schwenkstellung am Lagerbock 3 fixiert.

Zum Lösen der Sperrklinke 10 aus dem Sperrsegment 11 wird der Druckknopf 8 betätigt. Dadurch wird die Betätigungsstange 7 verschoben und die Sperrklinke 10 gegen die Federkraft des Federelements 14 vom Sperrsegment 11 abgelöst. Dann kann der Handbremshebel 2 gegen den Lagerbock 3 geschwenkt werden.

Der Lagerbock 3 weist an seinem der den Handbremshebel 2 aufnehmenden Schwenklagerung 4 abgewandten Ende ein Segment in Form eines dünnwandigen, in einer vertikalen Ebene verlaufenden Wandelements 3a auf.

An einer Seite des Wandelements 3a schließt eine Verstrebung 15 an, die Bestandteil des Lagerbocks 3 ist (Figuren 1, 2, 4). Die ebene Oberseite der Verstrebung 15 bildet einen Endanschlag für den Handbremshebel 2. Zur Dämpfung bei Aufsetzen des Handbremshebels 2 auf den Endanschlag ist auf die Oberseite der Verstrebung 15 ein Gummipuffer 16 aufgebracht.

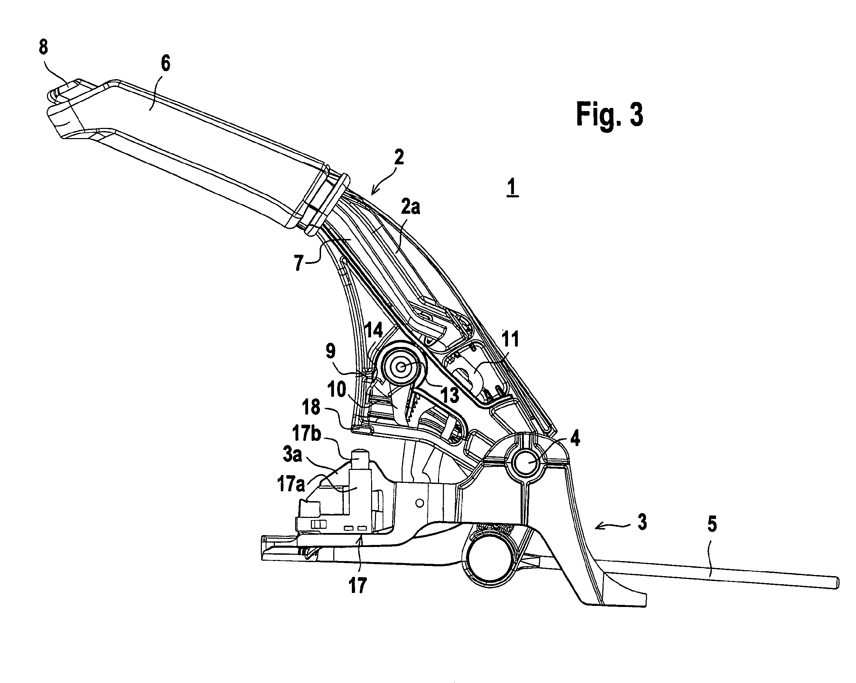

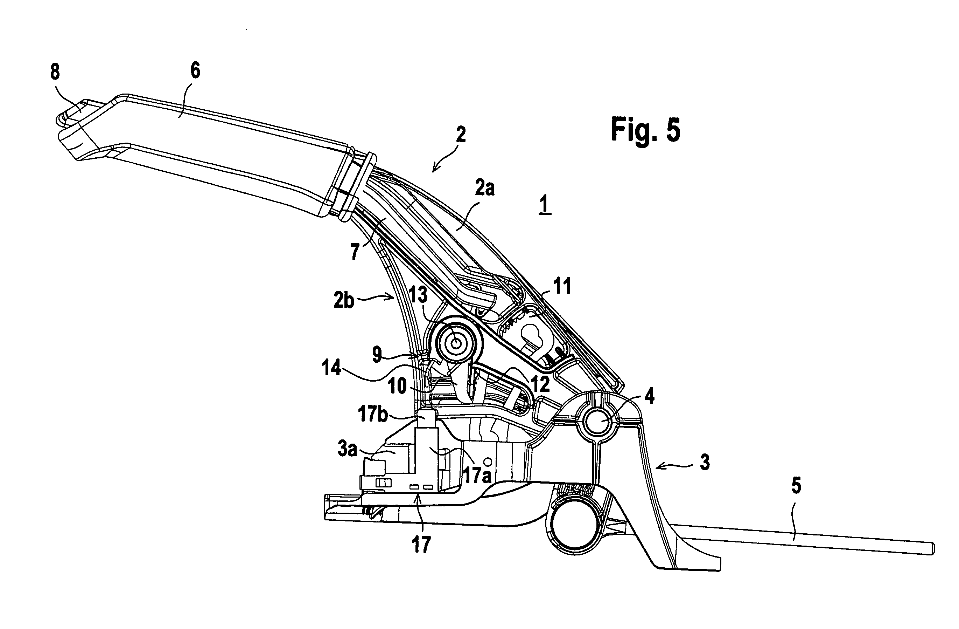

An der zweiten Seite des Wandelements 3a ist ein Schalter 17 befestigt (Figuren 3, 5). Der Schalter 17 weist ein Schaltgehäuse 17a auf, das seitlich am Wandelement 3a des Lagerbocks 3 befestigt ist. Weiterhin weist der Schalter 17 einen Schaltknopf 17b auf, der über die Oberseite des Schaltgehäuses 17a hervorsteht.

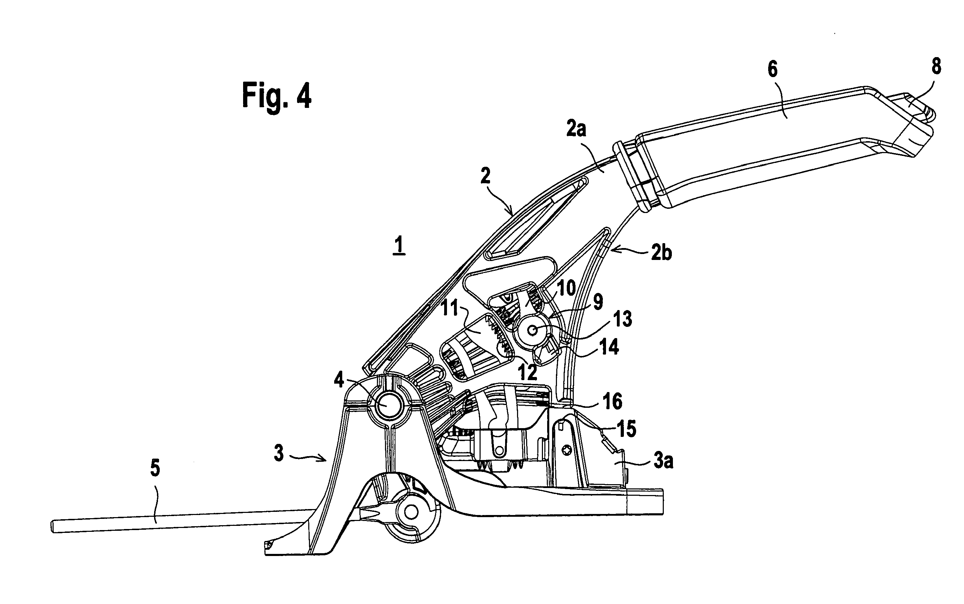

Im nicht betätigten Zustand steht der Schaltknopf 17b, wie in den Figuren 1 bis 3 dargestellt, weit über das Schaltgehäuse 17a hervor. Im betätigten Zustand ist der Schaltknopf 17b in das Schaltgehäuse 17a eingedrückt (Figuren 4, 5).

Mit dem Schalter 17 wird eine Anzeige in dem Fahrerraum des Kraftfahrzeugs, in welchem auch der Handbremshebel 2 für den Fahrer zugänglich angeordnet ist, angesteuert. Die Anzeige zeigt, vorzugsweise mit einer Warnmeldung, an, wenn die Feststellbremse angezogen ist. Diese Anzeige erscheint, wenn der Schalter 17 betätigt ist. Wenn der Schalter 17 nicht betätigt ist, unterbleibt die Warnmeldung. Damit wird die Anzeige im Fahrerraum nicht aktiviert, wenn sich der Schalter (17) in einem ersten Schaltzustand ("nicht betätigt") befindet. Weiterhin ist die Anzeige aktiviert, wenn sich der Schalter 17 in einem zweiten Schaltzustand ("betätigt") befindet.

Der auf der Oberseite der Verstrebung 15 aufgebrachte Gummipuffer 16, der den Endanschlag bildet, bildet eine Auflagefläche gegen welchen der Handbremshebel 2 führbar ist. Dieser Endanschlag liegt benachbart, das heißt unmittelbar angrenzend zum Schaltknopf 17b des Schalters 17.

Der Handbremshebel 2 weist einen Grundkörper 2b auf, an welchen die Führung 2a des Handbremshebels 2 anschließt. An dem der Schwenklagerung 4 abgewandten Ende des Grundkörpers 2b befindet sich an dessen unterem Rand ein Anschlagsegment 18, dessen ebene Unterseite eine Anschlagfläche bildet, welche in einer Ebene verläuft. Die Anschlagfläche ist so dimensioniert, dass dann, wenn die Anschlagfläche auf dem Endanschlag aufliegt, die Anschlagfläche zugleich den Schaltknopf 17b drückt und so den Schalter 17 betätigt.

Ist die Feststellbremse durch Anziehen des Handbremshebels 2 betätigt, so ist der Handbremshebel 2 so nach oben geschwenkt und in dieser Schwenkstellung mit der Festsetzeinrichtung 9 fixiert, dass die Anschlagfläche des Anschlagsegments 18 von dem Endanschlag und dem Schaltknopf 17b abgehoben ist (Figuren 1 bis 3).

In einer solchen Schwenkstellung ist das Anschlagsegment 18 mit der Anschlagfläche vom Endanschlag abgehoben. Dementsprechend ist auch die Anschlagfläche vom Schaltknopf 17b abgehoben, so dass dieser durch einen Federmechanismus oder dergleichen aus dem Schaltgehäuse 17a herausgefahren ist, so dass der Schalter 17 nicht betätigt ist.

Soll die Feststellbremse gelöst werden, wird der Druckknopf 8 betätigt und durch die Betätigungsstange 7 wird die Sperrklinke 10 vom Sperrsegment 11 gelöst. Dann wird der Handbremshebel 2 bis in seine untere Endposition abgesenkt.

Diese untere Endposition ist durch den Endanschlag definiert. In der unteren Endposition sitzt nämlich das Anschlagsegment 18 mit der Anschlagfläche auf dem Endanschlag am Lagerbock 3 auf, so dass ein weiteres Absenken des Handbremshebels 2 nicht mehr möglich ist. In dieser unteren Endposition liegt die Anschlagfläche des Anschlagsegments 18 nicht nur am Endanschlag an. Vielmehr drückt die Anschlagfläche auch den Schaltknopf 17b in das Schaltgehäuse 17a des Schalters 17 so dass der Schalter 17 betätigt ist.

Da der Schalter 17 mit dem Endanschlag an dem der Schwenklagerung 4 abgewandten Ende angeordnet ist, wird auch bei kleinen Schwenkwinkeln der Handbremshebel 2 aus der unteren Endposition des Handbremshebels 2 heraus ein großer Hub der Anschlagfläche erhalten, so dass bereits auch bei derartigen kleinen Schwenkwinkeln des Handbremshebels 2 die Anschlagfläche sicher vom Schaltknopf 17b abgehoben ist, so dass auch dann der Schalter 17 sicher in den nicht betätigten Zustand wechselt. Damit wird erreicht, dass der Schalter 17 nur dann betätigt ist, wenn der Handbremshebel 2 in seiner unteren Endposition liegt, das heißt wenn die Anschlagfläche des Anschlagsegments 18 auf dem Endanschlag aufliegt.

### Bezugszeichenliste

- (1): Betätigungsvorrichtung
- (2): Handbremshebel
- (2a): Führung
- (2b): Grundkörper
- (3): Lagerbock
- (3a): Wandelement
- (4): Schwenklagerung
- (5): Übertragungselement
- (6): Handgriff
- (7): Betätigungsstange
- (8): Druckknopf
- (9): Festsetzeinrichtung
- (10): Sperrklinke
- (11): Sperrsegment
- (12): Rastzahn
- (13): Drehlagerung
- (14): Federelement
- (15): Verstrebung
- (16): Gummipuffer
- (17): Schalter
- (17a): Schaltgehäuse
- (17b): Schaltknopf
- (18): Anschlagsegment

## Patentansprüche

1. Betätigungsvorrichtung (1) für eine Feststellbremse mit einem an einem Lagerbock (3) schwenkbar gelagerten Handbremshebel (2), welcher mittels einer Festsetzeinrichtung (9) in einer vorgegebenen Schwenkstellung fixierbar ist, und mit einer im Handbremshebel (2) geführten und in Wirkverbindung mit der Festsetzeinrichtung (9) stehenden Betätigungsstange (7), welche im Handbremshebel (2) verschiebbar gelagert ist, **dadurch gekennzeichnet, dass** am Lagerbock (3) benachbart angeordnet ein Endanschlag und ein Schalter (17) vorgesehen sind, wobei der Handbremshebel (2) ein Anschlagsegment (18) aufweist, wobei in einer durch den Endanschlag bestimmten Endposition des Handbremshebels (2) das Anschlagsegment (18) am Endanschlag anliegt und dabei den Schalter (17) betätigt.

2. Betätigungsvorrichtung nach Anspruch 1, **dadurch gekennzeichnet, dass** das Anschlagsegment (18) an dem einer Schwenklagerung (4) des Handbremshebels (2) am Lagerbock (3) abgewandten Ende des Handbremshebels (2) angeordnet ist.

3. Betätigungsvorrichtung nach einem der Ansprüche 1 oder 2, **dadurch gekennzeichnet, dass** das Anschlagsegment (18) des Handbremshebels (2) eine in einer Ebene verlaufende Anschlagfläche aufweist, welche an den Endanschlag und den Schalter (17) anlegbar ist.

4. Betätigungsvorrichtung nach einem der Ansprüche 1 bis 3, **dadurch gekennzeichnet, dass** der Schalter (17) einen an der Oberseite eines Schaltgehäuses (17a) verschiebbar gelagerten Schaltknopf (17b) umfasst, welcher durch das Anschlagsegment (18) des Handbremshebels (2) in das Schaltgehäuse (17a) einfahrbar ist.

5. Betätigungsvorrichtung nach Anspruch 4, **dadurch gekennzeichnet, dass** der Schalter (17) bei aus dem Schaltgehäuse (17a) ausgefahrenem Schaltknopf (17b) einen ersten Schaltzustand und bei in das Schaltgehäuse (17a) eingefahrenem Schaltknopf (17b) einen zweiten Schaltzustand aufweist.

6. Betätigungsvorrichtung nach Anspruch 5, **dadurch gekennzeichnet, dass** abhängig von den Schaltzuständen des Schalters (17) eine Anzeige für die Betätigung der Feststellbremse aktiviert oder deaktiviert ist.

7. Betätigungsvorrichtung nach einem der Ansprüche 1 bis 6, **dadurch gekennzeichnet, dass** zur Ausbildung des Endanschlags an einem Segment des Lagerbocks (3) eine Auflagefläche vorgesehen ist, auf welche die Anschlagfläche des Anschlagsegments (18) des Handbremshebels (2) führbar ist.

8. Betätigungsvorrichtung nach Anspruch 7, **dadurch gekennzeichnet, dass** auf die Auflagefläche ein Gummipuffer (16) aufgebracht ist.

9. Betätigungsvorrichtung nach einem der Ansprüche 7 oder 8, **dadurch gekennzeichnet, dass** das Schaltgehäuse (17a) seitlich am Segment des Lagerbocks (3) fixiert ist.
